# EUROPEAN PATENT APPLICATION

(11) **EP 2 075 586 A1**
(43) Date of publication of application: **01.07.2009**
(21) Application number: 07807760.9
(22) Date of filing: 21.09.2007
(51) Int. Cl.: G01N 35/10

(54) **DISPENSER**

(30) Priority: 22.09.2006 JP 2006256776
(71) Applicant: Fujifilm Corporation, Minato-Ku Tokyo 106-8620 (JP); Wako Pure Chemical Industries, Ltd., Amagasaki-shi, Hyogo 661-0963 (JP)
(72) Inventor: MIYATO, Takahiro, Ashigarakami-gun Kanagawa 258-0023 (JP); KUROSAWA, Tatsuo, Amagasaki-shi Hyogo 661-0963 (JP); KAWABATA, Tomohisa, Amagasaki-shi Hyogo 661-0963 (JP); HAYASHI, Masayoshi, Amagasaki-shi Hyogo 661-0963 (JP)
(74) Representative: Klunker . Schmitt-Nilson . Hirsch
(86) International application number: PCT/JP2007/068429
(87) International publication number: WO 2008/035778

(57) **Abstract**

A dispensing device for a microchip, which discharges a liquid while preventing formation of a layer of air in a well without using a complicated control mechanism. The dispensing device discharges a liquid (F) into a well (11) of a microchip (10). The microchip (10) includes the well (11), which has an opening (11a) at the upper end thereof and is able to contain the liquid (F), and a microchannel (13a), which is in fluid communication with the lower end of the well (11). The well (11) has a well bottom portion (14a) formed by an annular step portion projecting inward at the lower end. The dispensing device discharges the liquid (F) from the tip opening (2a) after the dispensing nozzle (2) has been moved down until the tip opening (2a) is positioned in the well bottom portion.

## Description

### TECHNICAL FIELD

The present invention relates to a dispensing device, and in particular to a dispensing device for discharging a liquid into wells of a microchip having microchannels.

### BACKGROUND ART

In recent years, in the fields of chemicals, optics, clinical technology, biotechnology, etc., clinical analysis apparatuses have been developed, which use a microchip including a micro-sized circuit (so-called microchannels) formed on a substrate using a micromachining technology, which is commonly used for semiconductors, etc. The microchip includes wells serving as liquid receptacles, which are in fluid communication with the microchannels. The microchip is used, for example, as a biochip which allows efficient microanalysis of a biological material in cooperation with an electrophoresis analysis system. On the microchip, a series of analysis process steps, such as extraction of a component to be analyzed from the biological material (an extraction step), analysis of the component to be analyzed using a chemical/biochemical reaction (an analysis step), separation (a separation step) and detection (a detection step), are integrated. This integrated system is also called as µ-TAS (micro-TAS), Lab-on-a-Chip, etc.

On the other hand, in various tests and analyses, a dispensing device is used to dispense a liquid, such as a reagent, a specimen, a diluting fluid, etc., into dispense-destination containers. As an example of the dispensing device, a dispensing device which enables to discharge a liquid into dispense-destination containers with reliably preventing introduction of air bubbles is disclosed (Japanese Unexamined Patent Publication No. 2004-028683). In this dispensing device, while the liquid is discharged into each dispense-destination container, the tip of the dispensing nozzle is moved up along the curve of the internal shape of the container as the liquid level in the container rises depending on the amount of the dispensed liquid, so that the discharged liquid runs down on the inner surface of the container.

In the above-described dispensing device, however, in order to prevent introduction of air bubbles into the dispense-destination container, drive control of the dispensing nozzle is carried out such that, while the dispensing nozzle discharges the liquid into the dispense-destination container, the tip of the dispensing nozzle is moved along the inner surface of the container to follow the liquid level of the discharged liquid. Such control is complicated and difficult. In particular, in a case where the dispense-destination containers are micro-sized containers, such are the above-described wells of a microchip, highly accurate control is required and difficulty of the control is increased.

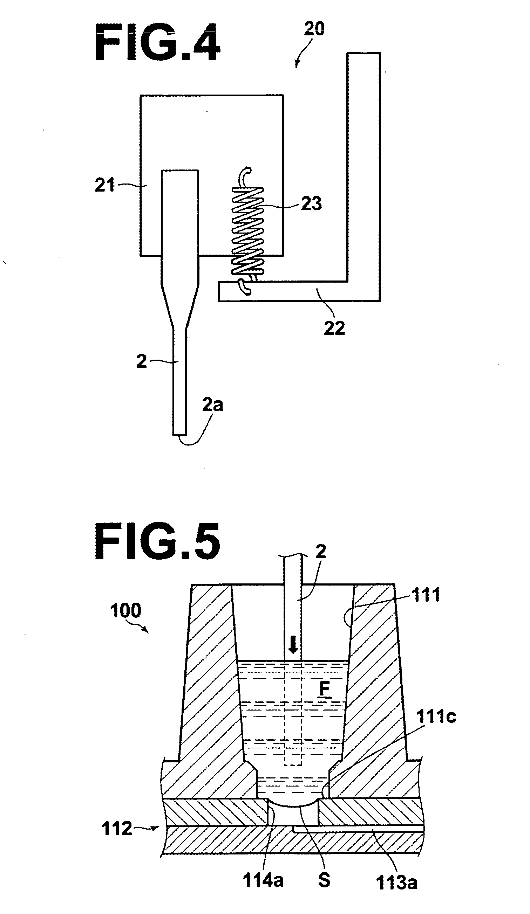

Further, as described above, the microchip includes wells and microchannels in fluid communication with the wells. FIG. 5 shows one example of a microchip 100 usable in the invention. The microchip 100 includes a well 111 which has an opening 111a at the upper end thereof and can contain a liquid F. A glass substrate 112, which is formed by two glass plates and includes a microchannel 113a formed therein, is disposed at the lower end of the well 111. The glass substrate 112 includes a well bottom portion 114a, which is formed by an annular step portion projecting inward, i.e., a continuous hole, and in fluid communication with the well 111 and the microchannel 113a. A step 111c is formed in the well 111 by the annular step portion.

When the well 111 has the step 111c therein, as described above, if the liquid F dispensed into the well 111 has a high surface tension, the liquid F discharged from the dispensing nozzle 2 and contacting the upper surface of the step 111c adheres along the inner circumferential surface of the well 111 above the step 111c due to the surface tension, and does not flow into a well bottom portion 114a and forms a film S of the liquid F in the vicinity of the step 111c, even if the drive control of the dispensing nozzle 2 is carried out as described above to move the tip of the dispensing nozzle 2 along the inner surface of the well 11. In this situation, the liquid F is not introduced to the area below the film S and a layer of air is formed there. The layer or air may hinder introduction of the liquid F into the microchannel 113a, or the layer of air may be introduced into the microchannel 113a, and this may lower the accuracy of analysis or may even hinder the analysis. Further, when the microchannel 113a is cleaned, the effect of cleaning may be lowered by the layer of air.

### DISCLOSURE OF THE INVENTION

In view of the above-described circumstances, the present invention is directed to providing a dispensing device for discharging a liquid while preventing formation of a layer of air in a well without using a complicated control mechanism.

The dispensing device of the invention is a dispensing device for discharging a liquid into a well of a microchip, the microchip including the well and a microchannel formed therein, the well having an opening at one end thereof and being able to contain a liquid, the microchannel being in fluid communication with another end of the well, the well having a well bottom portion formed by an annular step portion projecting inward at the other end. The dispensing device includes: a dispensing nozzle having a tip opening, the dispensing nozzle suctioning and discharging a liquid through the tip opening; piping connected to a rear end of the dispensing nozzle; pump means connected to the piping, the pump means supplying a suction pressure and a discharge pressure to the dispensing nozzle; moving means for causing relative movement of the dispensing nozzle at least in a depth direction of the well; and control means for causing the moving means to cause the relative movement of the dispensing nozzle until the tip opening is positioned in the well bottom portion, and then causing the liquid to be discharged from the tip opening such that the liquid first contacts a bottom surface and/or an inner circumferential surface of the well bottom portion.

In the dispensing device of the invention, it is preferred that the control means causes the relative movement of the dispensing nozzle to a position where the tip opening is apart from the bottom surface of the well bottom portion by a predetermined distance. The "position where the tip opening is apart from the bottom surface of the well bottom portion by a predetermined distance" herein means that a clearance is formed between the tip opening and the bottom surface of the well bottom portion, through which the liquid, which is discharged from the tip opening of the dispensing nozzle, flows out into the well.

In the dispensing device of the invention, the dispensing nozzle may be provided with a cushioning mechanism, and the moving means may cause the relative movement of the dispensing nozzle via the cushioning mechanism.

In the dispensing device of the invention, the cushioning mechanism may be formed by an elastic member.

The dispensing device of the invention is used to discharge a liquid into a well which has a well bottom portion formed by an annular step portion projecting inward. The dispensing device is provided with a control means for causing the moving means to cause the relative movement of the dispensing nozzle until the tip opening is positioned in the well bottom portion, and then causing the liquid to be discharged from the tip opening such that the liquid first contacts a bottom surface and/or an inner circumferential surface of the well bottom portion. Therefore, the liquid is discharged into the well at a position below the step formed by the annular step portion of the well bottom portion, and the discharged liquid first contacts the bottom surface or the inner circumferential surface of the well bottom portion and then moves up. Therefore, such a situation can be prevented that the discharged liquid first contacts the upper surface of the step and adheres along the inner circumferential surface of the well above the step to form a film due to the surface tension of the liquid. Thus, formation of the layer of air in the well can be prevented without using a complicated control mechanism. Further, such a situation that the layer of air hinders introduction of the liquid into the microchannel can be prevented, thereby minimizing lowering of the accuracy of analysis or effect of cleaning.

In the aspect in which the control means causes the relative movement of the dispensing nozzle to a position where the tip opening is apart from the bottom surface of the well bottom portion by a predetermined distance, such a situation can be prevented that the dispensing nozzle, which has a tip opening formed substantially parallel to the bottom surface of the well bottom portion, for example, is sealed by the bottom surface of the well bottom portion when the tip opening contacts the bottom surface of the well bottom portion and the dispensing nozzle is unable to discharge the liquid.

Further, in the aspect in which the dispensing nozzle is provided with a cushioning mechanism, and the moving means causes the relative movement of the dispensing nozzle via the cushioning mechanism, if the dispensing nozzle is move down and tip opening contacts the bottom surface of the well, for example, the cushioning mechanism can prevent the tip of the dispensing nozzle from being further moved down by the moving means after the contact and pressed against the bottom surface of the well, thereby preventing damage, etc., of the dispensing nozzle and the microchip.

### BRIEF DESCRIPTION OF THE DRAWINGS

FIG. 1 is a diagram illustrating the configuration of a dispensing device of the present embodiment,
FIG. 2 shows a perspective view and a sectional view of a microchip of the present embodiment,
FIG. 3 is a diagram for explaining how a liquid is dispensed into a well by the dispensing device of the present embodiment,
FIG. 4 is a diagram illustrating the structure of a cushioning mechanism, and
FIG. 5 is a diagram for explaining the problem to be solved by the invention.

### BEST MODE FOR CARRYING OUT THE INVENTION

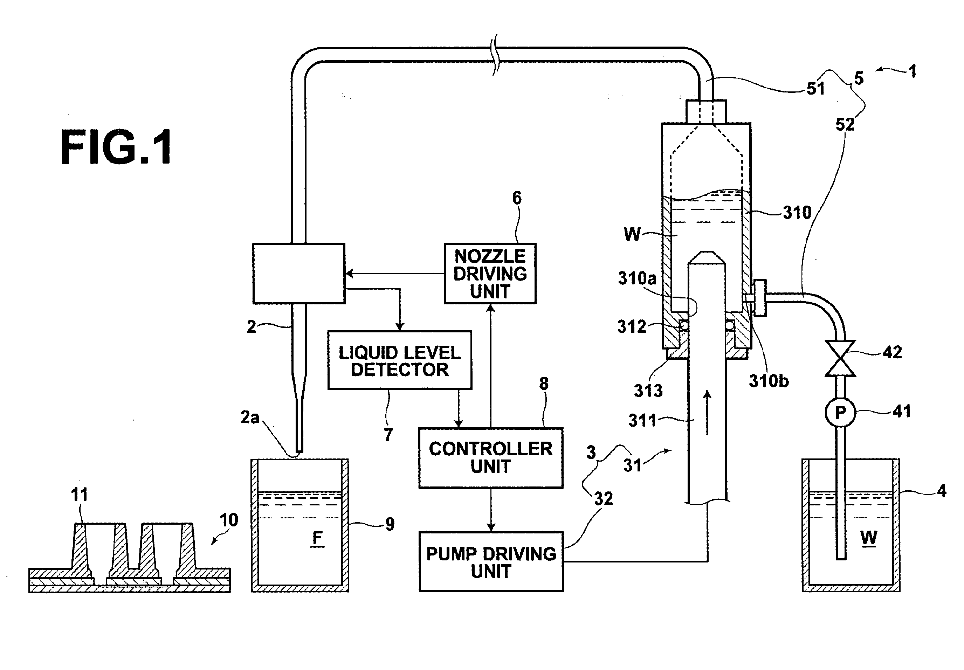

Hereinafter, a dispensing device according to one embodiment of the present invention will be described in detail with reference to the drawings. FIG. 1 is a diagram illustrating the configuration of a dispensing device 1 of this embodiment. It should be noted that, in this embodiment, the direction in which a liquid F is discharged (the direction in which a tip opening 2a of a dispensing nozzle 2 faces) is referred to as "downward" (downward in FIG. 1), for convenience.

The dispensing device 1 of this embodiment is incorporated into a clinical analysis apparatus, such as a biochemical analyzer, used at a medical institution, a research institute, etc. The dispensing device 1 is used to supply to a microchip 10 a small amount of liquid F, such as a specimen or a reagent, or water W serving as a rinsing liquid. As shown in FIG. 1, the dispensing device 1 generally includes: the dispensing nozzle 2; a syringe pump 31, which serves as a pump means 3 for supplying a suction pressure and a discharge pressure to the dispensing nozzle 2, and a pump driving unit 32; a liquid tank 4 which is connected to the syringe pump 31 and contains the water W; first piping 51 which connects between the dispensing nozzle 2 and the syringe pump 31; second piping 52 which connects between the syringe pump 31 and the liquid tank 4; a nozzle driving unit 6 which serves as a moving means for moving the dispensing nozzle 2 in the vertical and horizontal directions; a liquid level detector 7 which detects the liquid level; a controller unit 8 (control means) which controls the pump driving unit 32 and the nozzle driving unit 6 based on a signal from the liquid level detector 7; and a liquid container 9 which contains the liquid F.

The dispensing nozzle 2 includes the tip opening 2a, through which the liquid F is suctioned and discharged. The dispensing nozzle 2 is disposed with the tip opening 2a facing downward so as to be movable in the vertical and horizontal directions by a vertical movement mechanism and a horizontal movement mechanism (not shown) . Drive control of the dispensing nozzle 2 is achieved by the nozzle driving unit 6 including a motor, etc. , for driving these mechanisms. The upper portion of the dispensing nozzle 2 is connected to one end of the first piping 51, and the other end of the first piping 51 is connected to the syringe pump 31. It should be noted that, on the tip opening 2a of the dispensing nozzle 2, a tip in the form of a pipette, which can be replaced depending on the type of the liquid F, may be attached.

The syringe pump 31 generally includes: a substantially cylindrical syringe body 310, which is connected to the first piping 51 at the upper end thereof and has an insertion port 310a at the lower end thereof; a substantially rod-like plunger 311 having the upper portion thereof inserted into the insertion port 310a; an O-ring 312 attached around the outer circumference of the plunger 311 for sealing the insertion port 310a; and an O-ring retainer 313 attached at the lower end of the syringe body 310 for pressing the O-ring 312 from the lower end. The syringe pump 31 is driven by the pump driving unit 32 to supply the suction pressure and the discharge pressure to the dispensing nozzle 2. The pump driving unit 32 includes a motor (not shown), and supplies the discharge pressure or the suction pressure to the dispensing nozzle 2 by moving the plunger 311 upward or downward according to the direction of rotation, i.e., forward or reverse rotation, of the motor. It should be noted that a mechanism for converting the rotational power of the motor into the vertical movement of the plunger 311 maybe achieved using various mechanisms, such as a screw mechanism, a ball screw mechanism, and a rack-and-pinion mechanism, and the mechanism to be used may be changed as appropriate depending on the dispensing device 1.

Further, a liquid inlet port 310b is formed at a portion of the circumferential surface of the syringe body 310. One end of the second piping 52 is connected to the liquid inlet port 310b so that the water W is supplied via the second piping 52 from the liquid tank 4 connected to the other end of the second piping 52. For supplying the water W, a solenoid valve 42 and a pump 41 are disposed at the middle of the second piping 52 in this order from the syringe pump 31, so that the water W contained in the liquid tank 4 can be supplied to the syringe pump 31 at an appropriate time.

The liquid level detector 7 includes a liquid level sensor, which utilize light or an ultrasonic wave. The liquid level detector 7 detects the liquid level of the liquid F contained in the liquid container 9, which will be described later, and outputs a liquid level detection signal to the controller unit 8. It should be noted that the configuration of the liquid level detector 7 is not limited to that described above, as long as the liquid level detector 7 can detect the liquid level, and the configuration of the liquid level detector 7 may be changed as appropriate.

The controller unit 8 controls the nozzle driving unit 6 and the pump driving unit 32 based on the signal from the liquid level detector 7 to control movement of the dispensing nozzle 2 and the suction pressure and the discharge pressure supplied by the syringe pump 31. The characteristic feature of the invention is that the controller unit 8 exerts control such that the nozzle driving unit 6 moves down the dispensing nozzle 2 until the tip opening 2a reaches a well bottom portion 14a, which will be described later, and then the liquid F is discharged from tip opening 2a. An operation of dispensing the liquid F including this discharge will be described in detail later. The controller unit 8 is provided with data about the position and shape of the microchip 10 including the liquid container 9 and the well bottom portion 14a of a well 11, which will be described later, and data about the upper and lower limit values of the liquid level in the well 11. The controller unit 8 controls the pump driving unit 32 to keep the liquid level of the liquid discharged into the well 11 between the upper limit value and the lower limit value so that the liquid F does not overflow from the well 11. It should be noted that the data may be changed by the user as necessary. Further, although the liquid container 9 of this embodiment is formed by a cylindrical container having an opening at the upper end thereof, this is not intended to limit the liquid container 9 of the invention. The liquid container 9 may have any shape, such as a rectangular cylinder, as long as it has an opening at the upper end and can contain a liquid, and the shape of the liquid container 9 may be changed as appropriate.

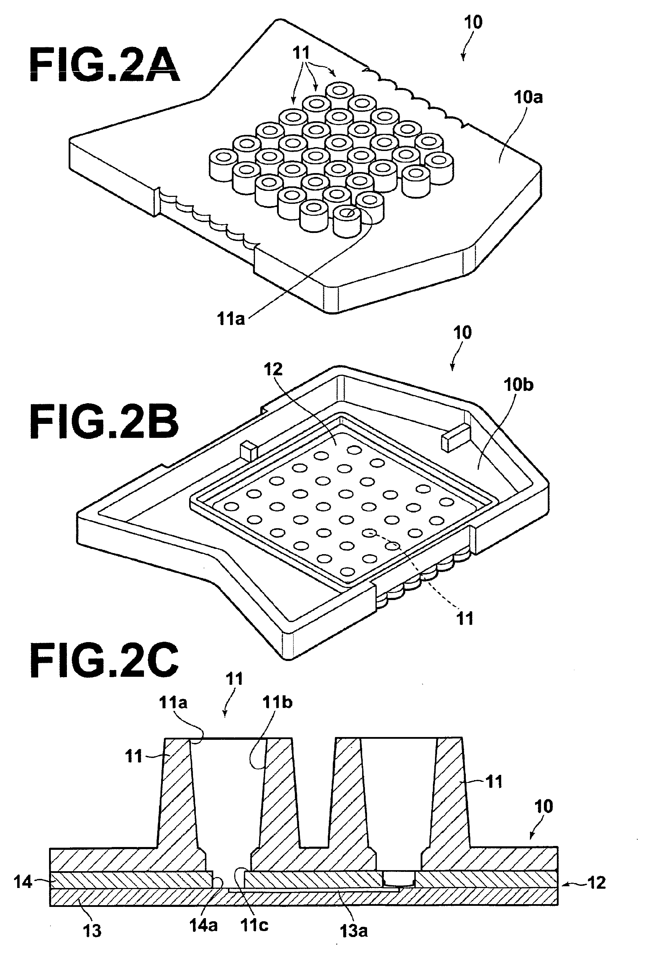

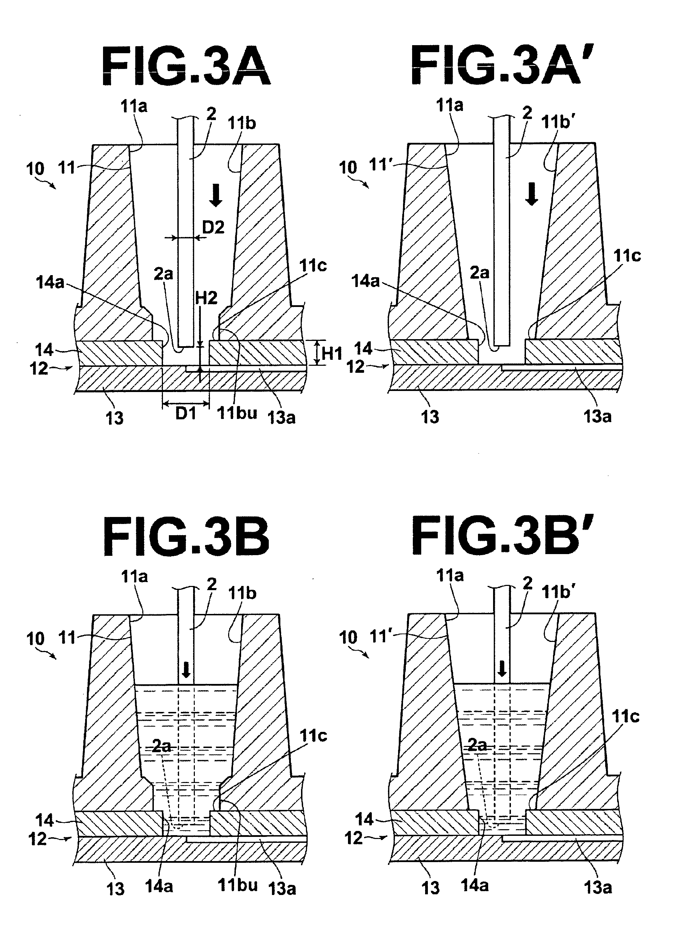

FIG. 2(a) is a perspective view of the microchip 10 of this embodiment, FIG. 2(b) is a perspective view of the microchip 10 of FIG. 2(a) viewed from below, FIG. 2(c) is a sectional view of the wells 11 of FIG. 2(a), and FIG. 3 is a diagram for explaining how the liquid F is dispensed into each well 11 by the dispensing device 1 of this embodiment. It should be noted that the microchip 10 of this embodiment is described with referring the side at which openings 11a of the wells 11 are provided as the upper end (the upper side in the drawings), for convenience.

As shown in FIG. 2(a), the microchip 10 of this embodiment has a substantially rectangular shape or an arrow-like shape and is formed of a synthetic resin. The microchip 10 includes the plurality of wells 11 formed on an upper surface 10a thereof. As shown in FIG. 2(b), a glass plate (a transparent plate member) 12 is attached at a lower surface 10b of the microchip 10. As shown in FIG. 2(c), the glass plate 12 is formed by a first substrate 13 and a second substrate 14 bonded to the upper surface of the substrate 13. The first substrate 13 includes microchannels 13a formed in the upper surface thereof, and the second substrate 14 includes continuous holes 14a (well bottom portion 14a), which are in fluid communication with the microchannels 13a and form the bottom portions of the wells 11.

Each well 11 includes the opening 11a at the upper end thereof, and a well taper portion 11b, which extends downward from the opening 11a to join to the well bottom portion 14a. The well taper portion 11b is formed such that the diameter thereof gradually decreases from the upper end to the lower end. Since the well bottom portion 14a has an even smaller diameter, a step 11c is formed by an annular step portion at the boundary between the well taper portion 11b and the well bottom portion 14a. It should be noted that, as shown in FIGs. 3(a) and 3(b), the well taper portion 11b has a lower end vertical portion 11bu, which extends vertically from the lower end to a predetermined position in the direction toward the upper end. However, as shown in FIGs. 3 (a') and 3 (b'), the well taper portion 11b may not have the lower end vertical portion 11bu. The first substrate 13 and the second substrate 14 may be formed of a synthetic resin, besides glass, and both of them may be transparent, or only one of them, through which optical measurement is carried out, may be transparent. Although the microchannels 13a are formed in the first substrate 13 in this embodiment, this is not intended to limit the microchip 10 used with the dispensing device of the invention. The microchannels 13a may be formed in the second substrate 14, as long as the microchannels 13a are formed between the first substrate 13 and the second substrate 14. The dispensing device 1 of this embodiment is formed as described above.

Next, the operation of dispensing the liquid F using the dispensing device 1 having the above-described configuration is described in detail.
1) First, the solenoid valve 42 is opened and then the pump 41 is driven to feed the water W contained in the liquid tank 4 to the syringe pump 31. At this time, the pump 41 feeds the water W until the water W is discharged from the tip of the dispensing nozzle 2. Then, as the water W is discharged from the tip of the dispensing nozzle 2 and the water W fills the second piping 52 and the dispensing nozzle 2 to the tip of the dispensing nozzle 2, the solenoid valve 42 is closed and the driving of the pump 41 is stopped. It should be noted that, when the water W is introduced into the syringe pump 31, an air bubble detecting means (not shown) may be disposed at the middle of the first piping 51 and the second piping 52 to determine whether air bubbles are present in the piping 5, and if air bubbles are present, the water W may be fed until there are no air bubbles. Further, the opening and closing of the solenoid valve 42 and driving of the pump 41 may be controlled automatically or manually, as long as the water W can be fed to fill the second piping 52 and the dispensing nozzle 2 to the tip of the dispensing nozzle 2.
2) Subsequently, the plunger 311 is moved into the syringe body 310 to discharge the water W from the dispensing nozzle 2. Then, the plunger 311 is moved out from the syringe body 310 to suction air into the dispensing nozzle 2 to an extent that the water W is not mixed with the liquid F, which will be described later. By suctioning and discharging the liquid F in this state, the dispensing operation can accurately be carried out.
3) Then, the nozzle driving unit 6 moves the dispensing nozzle 2 such that the liquid container 9 is positioned below the tip opening 2a of the dispensing nozzle 2. At this time, the microchip 10 is placed within a range in which the dispensing nozzle 2 can be moved horizontally (see FIG. 1).
4) Then, the nozzle driving unit 6 moves down the dispensing nozzle 2 based on the signal from the liquid level detector 7 so that the tip opening 2a is inserted into the liquid F below the liquid level thereof in the liquid container 9. In this state, the plunger 311 is moved out from the syringe body 310 to suction a predetermined amount of the liquid F.
5) Then, the nozzle driving unit 6 moves up the dispensing nozzle 2 holding the liquid F therein to a position above the liquid container 9. At this time, the nozzle driving unit 6 is driven based on the data about the shape of the liquid container 9, which is set in advance in the controller unit 8.
6) Then, based on the data of positions of the wells 11 of the microchip 10, which is also set in advance in the controller unit 8, the nozzle driving unit 6 moves the dispensing nozzle 2 horizontally from the position above the liquid container 9 to a position above one of the wells 11 of the microchip 10.
7) Then, as shown in FIG. 3(a), the nozzle driving unit 6 moves down the dispensing nozzle 2 based on the data in the controller unit 8 so that the tip opening 2a of the dispensing nozzle 2 is positioned in the well bottom portion 14a (in the direction of the arrow in the drawing). At this time, the controller unit 8 causes the dispensing nozzle 2 to be moved down in a position where the tip opening 2a is positioned apart from the bottom surface of the well bottom portion 14a by a predetermined distance (0 < H2 < H1 in FIG. 3), that is, a clearance is formed between the tip opening 2a and the bottom surface of the well bottom portion 14a, through which the liquid F, which is discharged from the tip opening 2a of the dispensing nozzle 2, flows out into the well 11. Thus, for example, in a case where the tip opening 2a is formed substantially parallel to the bottom surface of the well bottom portion 14a, such a situation can be prevented that the dispensing nozzle 2 is sealed by the bottom surface of the well bottom portion 14a when the tip opening 2a contacts the bottom surface of the well bottom portion 14a and the dispensing nozzle 2 is unable to discharge the liquid F. It should be noted that, in a case where the tip opening 2a is not parallel to the bottom surface of the well bottom portion 14a, such that the tip opening 2a has an oblique shape, the dispensing nozzle 2 may be moved down until the tip opening 2a contacts the bottom surface of the well bottom portion 14a (H2 = 0 in FIG. 3). It is preferred that the dispensing nozzle 2 is moved down toward the substantial center of the bottom surface of the well bottom portion 14a.
8) Then, the plunger 311 is moved into the syringe body 310 to discharge a small amount of the liquid F, which is required by the well 11, from the tip opening 2a of the dispensing nozzle 2, as shown in FIG. 3 (b) . At this time, in order to prevent mixing of air in the liquid F in the well 11, some of the liquid F is left in the dispensing nozzle 2. By discharging the liquid F at a position below the step 11c formed in the well 11 by the annular step portion of the well bottom portion 14a in this manner, the discharged liquid F first contacts the bottom surface or the inner circumferential surface of the well bottom portion 14a and then moves up. Therefore, such a situation can be prevented that the discharged liquid F first contacts the upper surface of the step 11c and adheres along the inner circumferential surface of the well 11 above the step 11c to form a film due to the surface tension of the liquid F. Thus, formation of the layer of air in the well 11 can be prevented without using a complicated control mechanism. Further, such a situation that the layer of air hinders introduction of the liquid F into the microchannel 13a can be prevented, thereby minimizing lowering of the accuracy of analysis.
9) Subsequently, the nozzle driving unit 6 moves up the dispensing nozzle 2 to a position above the well 11, and the operation of discharging the liquid F into the well 11 is completed.

It should be noted that, in the dispensing device 1 of this embodiment, it is preferred that a diameter of the tip of the dispensing nozzle 2 is D2 = 0.5 mm, a width in the depth direction, i.e., a height, of the well bottom portion 14a is H1 = 0.7 mm or more, and a diameter of the well bottom portion 14a is D1 = 1.2 to 2.2 mm, and it is preferred that D2 × 2 < D1 (see FIG. 3 (a) for the symbols).

Although the dispensing device 1 of this embodiment has the above-described configuration, this is not intended to limit the invention. For example, the dispensing device may include a plurality of dispensing nozzles which are used to simultaneously supply the liquid to the plurality of wells 11 of the microchip 10.

Next, a second embodiment of the dispensing device according to the invention is described. The dispensing device of this embodiment includes a cushioning mechanism 20 in addition to the components of the dispensing device 1 of the above-described embodiment, and therefore only the cushioning mechanism 20 is explained. FIG. 4 is a diagram illustrating the structure of the cushioning mechanism 20.

As shown in FIG. 4, the cushioning mechanism 20 of this embodiment includes: a support member 21 which fixes and supports the rear end of the dispensing nozzle 2; a fixing member 22 being fixed to the vertical movement mechanism unit and the horizontal movement mechanism unit (not shown) to be moved in conjunction with these mechanism units; and a spring member 23 serving as an elastic member, with the upper end thereof engaging with the support member 21 and the lower end thereof engaging with the fixing member 22.

When the dispensing nozzle 2 is moved down and the tip opening 2a of the nozzle 2 contacts the bottom surface of the well bottom portion 14a, as described above, and if, for example, the dispensing nozzle 2 is moved down excessively by the nozzle driving unit 6, the repulsive force of the spring member 23 of the cushioning mechanism 20 moves the dispensing nozzle 2 relatively upward via the support member 21. Thus, the contact between the tip opening 2a of the dispensing nozzle 2 and the bottom surface of the well bottom portion 14a can be cushioned, thereby preventing damage of the dispensing nozzle 2 and the microchip 10, lowering of accuracy of the nozzle driving unit 6, etc.

It should be noted that, although the cushioning mechanism 20 of this embodiment has the above-described structure, this is not intended to limit the cushioning mechanism of the invention. For example, the cushioning mechanism may move the well bottom portion 14a, as long as the relative upward movement of the dispensing nozzle 2 can be achieved.

## Claims

1. A dispensing device for discharging a liquid into a well of a microchip, the microchip including the well and a microchannel formed therein, the well having an opening at one end thereof and being able to contain a liquid, the microchannel being in fluid communication with another end of the well, the well having a well bottom portion formed by an annular step portion proj ecting inward at the other end, the dispensing device comprising:
a dispensing nozzle comprising a tip opening, the dispensing nozzle suctioning and discharging a liquid through the tip opening;
piping connected to a rear end of the dispensing nozzle;
pump means connected to the piping, the pump means supplying a suction pressure and a discharge pressure to the dispensing nozzle;
moving means for causing relative movement of the dispensing nozzle at least in a depth direction of the well; and
control means for causing the moving means to cause the relative movement of the dispensing nozzle until the tip opening is positioned in the well bottom portion, and then causing the liquid to be discharged from the tip opening such that the liquid first contacts a bottom surface and/or an inner circumferential surface of the well bottom portion.

2. The dispensing device as claimed in claim 1, wherein the control means causes the relative movement of the dispensing nozzle to a position where the tip opening is apart from the bottom surface of the well bottom portion by a predetermined distance.

3. The dispensing device as claimed in claim 1, wherein the dispensing nozzle comprises a cushioning mechanism, and the moving means causes the relative movement of the dispensing nozzle via the cushioning mechanism.

4. The dispensing device as claimed in claim 3, wherein the cushioning mechanism comprises an elastic member.
